# EUROPEAN PATENT SPECIFICATION

(11) **EP 1 908 318 B1**
(45) Date of publication and mention of the grant of the patent: **29.12.2010**
(21) Application number: 06755778.5
(22) Date of filing: 17.07.2006
(51) Int. Cl.: H04W 64/00

(54) **METHODS OF SETTING UP A CALL WITH, AND DETERMINING THE DIRECTION OF, A MOBILE DEVICE**
VERFAHREN ZUM AUFBAUEN EINER VERBINDUNG MIT UND ZUM BESTIMMEN DER RICHTUNG VON EINER MOBILEN EINRICHTUNG
PROCEDES PERMETTANT D'ETABLIR UNE COMMUNICATION AVEC UN DISPOSITIF MOBILE ET DE DETERMINER LA DIRECTION DE CE DISPOSITIF MOBILE

(30) Priority: 22.07.2005 GB 0515124; 31.01.2006 GB 0601957
(43) Date of publication of application: 09.04.2008
(73) Proprietor: M.M.I. Research Limited, Wimborne Dorset BH21 2BJ (GB)
(72) Inventor: MARTIN, Paul Maxwell, M.M.I. Research Limited, London EC1V 4PY (GB); PRIDMORE, Andrew Paul, M.M.I. Research Limited, London EC1V 4PY (GB); TIMSON, Anthony Richard, M.M.I. Research Limited, London EC1V 4PY (GB); DOLBY, Riki Benjamin, M.M.I. Research Limited, London EC1V 4PY (GB)
(74) Representative: Ribeiro, James Michael
(86) International application number: PCT/GB2006/002635
(87) International publication number: WO 2007/010220

(56) References cited:
- EP-A- 1 199 903
- WO-A-90/09082
- WO-A-2005/011317
- US-A1- 2001 009 544

## Description

The present invention relates in a first aspect to a method, and associated apparatus, for setting up a call with a mobile communication device and determining the direction of the mobile communication device.

In security applications, such as direction finding, it is necessary to set up some form of call with a mobile communication device. However a problem with conventional methods of setting up a call is that they are not covert.

In WO 2005/011317 a virtual base station (VBS) causes a mobile station (MS) to transmit a paging response signal RES, and performs direction finding on that signal. The VBS distinguishes the paging response signal RES on the basis of the identification information ID contained therein from the paging response signals of other mobile stations that are also received on this SDCCH channel or other channels. In other words, there may be other MSs transmitting on the same channel (that is, it is not a "quiet channel") but the required signal is extracted on the basis of the identification information ID. The problem with WO 2005/011317 is that extra processing is required at the direction finding equipment to extract the identification information ID and thus distinguish over the interfering paging response signals.

In EP-A-1199903 a virtual base station (VBTS) sets up a "silent call" with a mobile station (MS) and then performs direction finding based on the received signals. However, EP-A-1199903 does not present any solution to the problem of co-channel interference from other MSs.

A first aspect of the invention provides a method of determining the direction of a mobile device as set out in claim 1.

The first aspect of the invention provides a method of setting up a so-called "blind call" - that is, a signaling connection, with or without the exchange of user data, which does not provide a visual or audible alert to a user of the device. Such a "blind call" can then be used for direction finding.

Recent availability of Third Generation mobile phone and related devices leads to a requirement for new methods to locate 3G phones which use Code Division Multiple Access (CDMA) techniques on the air interface. New techniques for tracking the phones are required which are completely different to the techniques used to track GSM phones.

Note that 3G networks include added security protection via a mechanism known as mutual authentication. This technique involves a two step authentication where a) the UE is authenticated with the network and b) the network is authenticated with the UE. In GSM, only a) applies, leading to the possibility of a security attack via a false base station. Mutual authentication inhibits the conventional mechanism for establishing a mobile phone as an RF beacon and enabling the direction finding equipment to locate the beacon on a known frequency/code/timeslot. This is because the UE will ignore messages which are not from a suitably authenticated network device leading to UE transmissions which are abruptly terminated at such a point in the protocol exchanges where the UE determines that the network it is talking to has incorrect or missing "Integrity" protection data when it is mandated by the specifications.

UMTS networks transmit over the air using CDMA (Code division multiple access) technology. This means that the signal from a single 3G transmission device is very hard to distinguish from background noise, because the transmission is scrambled using a pattern that spreads the signal power across a wide frequency range. It is possible to decode the signal from a single device if you know the scrambling code that was used at the transmitter.

The spread-spectrum nature of the CDMA signal makes direction finding in the frequency domain much harder because the transmitted signal is very hard to distinguish from noise.

Thus in one embodiment of the invention the locator signal is an encoded locator signal (for instance from a CDMA device) which is decoded, and the decoded locator signal is used to determine the direction of the device.

Embodiments of the invention will now be described with reference to the accompanying drawings, in which:
Figure 1 shows a system for determining the direction of a GSM mobile communication device;
Figure 2 shows a Separately Introduced Base Station (SIBTS);
Figure 3 shows a system for determining the direction of a 3G mobile communication device;
Figure 4 shows a Separately Introduced NodeB (SINodeB);
Figure 5 shows various channel allocations in a CDMA system;
Figure 6 shows a direction finder; and
Figure 7 shows a display format.

### 1.0 GSM

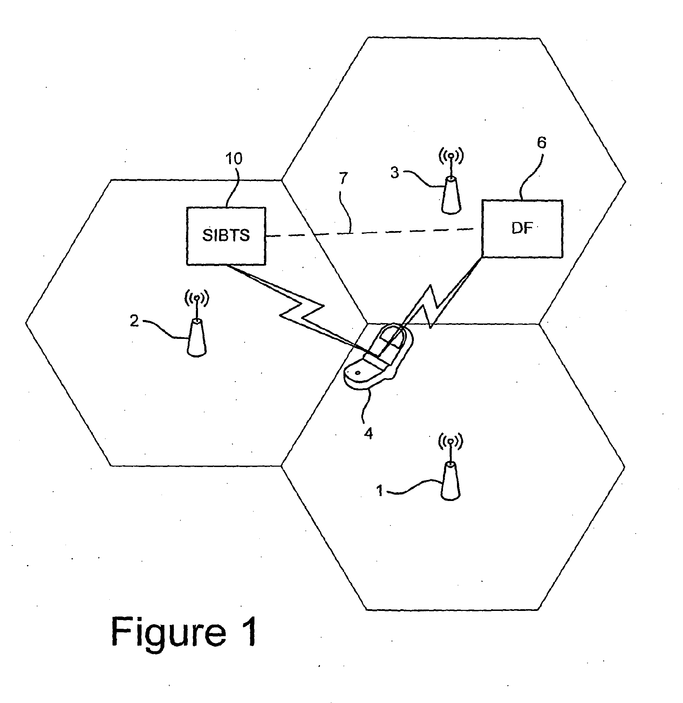

Referring to Figure 1, three base stations (BTSs) 1-3 form part of a network to communicate with a GSM mobile device (MS) 4.

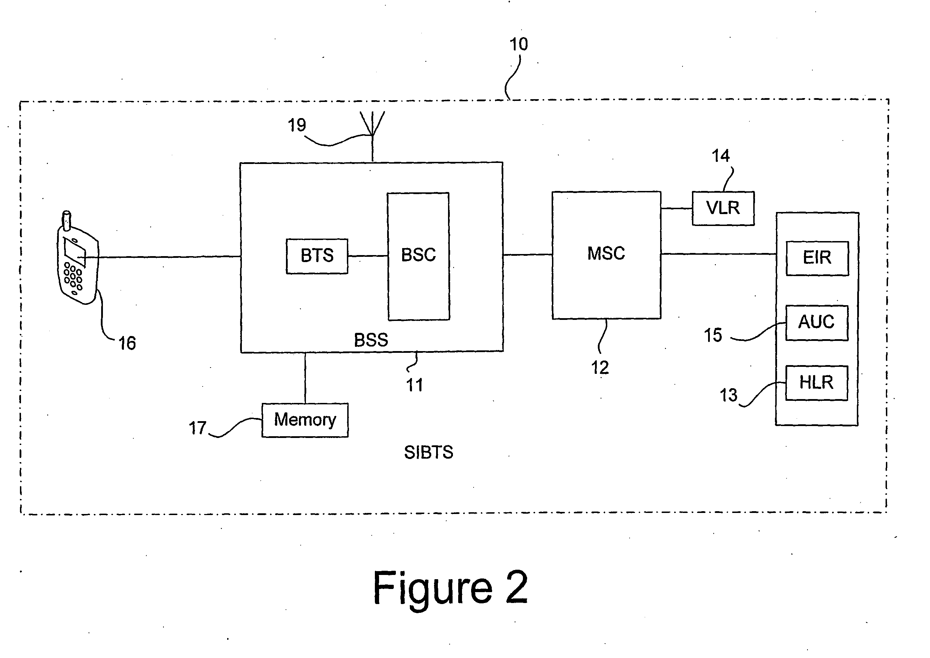

A Separately Introduced Base Station (SIBTS) 10 is also shown. The SIBTS 10 is shown in detail in Figure 2. The SIBTS obtains GSM parameters from a test mobile phone 16, and performs a subset of the functions of a complete GSM network, ranging from air interface protocol exchanges in the Base Station System (BSS) 11 to the switch oriented functions at the Mobile Switching Centre (MSC) 12 and security and authentication functions of the Home Location Register (HLR) 13, Visitor Location Register (VLR) 14 and Authentication Centre (AUC) 15.

The SIBTS 10 has a memory 17 which stores the International Mobile Subscriber Identity (IMSI), Temporary Mobile Subscriber Identity (TMSI) and International Mobile Equipment Identity (IMEI) of the MS 4 (and any other MSs which the SIBTS is to monitor). The IMSI and IMEI may be obtained by downloading them directly from the MS 4. That is, the IMSI may be obtained by removing the SIM card from the MS 4, and inverting the SIM card into a commercially available SIM-reader, and the IMEI may be obtained by typing *#06# into the keypad of the MS. The IMSI and/or the IMEI may also be obtained directly from the network operator. Alternatively, the SIBTS 10 may interrogate the MS 4 to acquire its IMSI and IMEI, following a method of the kind described in EP-A-1051043. That is, the MS 4 selects a base station (BTS) 1 with the highest power level and camps on that BTS 1. The SIBTS 10 (which is as close as possible to the MS 4) obtains the BA list from BTS 1, selects a base station (BTS2) from the BA list adjacent to BTS 1, and operates on the channel frequency (BCCH) of the BTS2 at a power higher than that of the BTS 1. This causes the MS 4 to camp on the SIBTS 10. The SIBTS 10 emits a location area code (LAC) which differs from the LACs in the vicinity of the MS. This causes the MS 4 to transmit its IMSI and IMEI codes to the SIBTS 10.

The SIMBTS 10 is typically a mobile device, which may be housed in a vehicle. In use, the SIMBTS 10 is moved to an area, and operated to acquire identity parameters from a set of MSs registered with the GSM network in that area. Alternatively the SIMBTS 10 may be permanently located in an area of interest. In both cases, the SIMBTS 10 effectively transmits a false cell broadcast which is not under the control of the GSM network providing coverage to that area.

Once possessing the IMSI and IMEI, it is possible to cause a specific mobile phone to transmit on a GSM frequency as it would in a normal voice call. This can be achieved using standard GSM protocols, as in conventional GSM infrastructure. Once transmitting, a direction finder 6 can be used to determine the direction of the MS 4 relative to the direction finder 6.

The direction finder 6 detects radiation from the MS 4 with an array of N (for instance four) antennas, and infers the direction of the MS 4 from the different times of arrival at the N antennas. Examples of suitable direction finders are the Smart AIR and Esmeralda products provided by Thales Group, details being available at:
- http://www.thalesgroup.com/land-
   joint/portfolio/02_c4isr/05_monitoring/02_smartair/02_05_02.htm; and at
- http://www.thalesgroup.com/land-
   joint/portfolio/02_c4isr/05_monitoring/01_esmeralda/02_05_01.htm

The Esmeralda product performs direction finding by a method of 2 channel correlative interferometry, or by the Watson Watt method.

The SIBTS 10 causes the MS 4 to start transmitting without giving any indication of doing so to the user. This is referred to herein as a "blind call". Once a blind call has been set up, the direction finder 6 can perform direction finding without the user knowing this is happening.

### 1.1 GSM Blind Call Setup

The setup of a blind call is illustrated by the mechanism shown in Table 1. This is specified using GSM layer 2 and 3 messages exchanged between the BSS and the MS. These messages are conventional messages as mentioned in GSM 04.08 "Mobile Radio Interface Layer 3 Specification". The messages come with a variable number of parameters which are significant. However a skilled GSM engineer would be able to determine what the parameters should be. The order of the messages is implied from the Message No. column.

**Table 1**

| **Message No** | **Message** | **Source** |
|---|---|---|
| 1 | RR Channel Request | MS |
| 2 | RR Immediate Assignment | BSS |
| 3 | RR Paging Response | MS |
| 4 | MM Authentication Request | BSS |
| 5 | RR Measurement Report | MS |
| 6 | System Information Type [5 or 6] | BSS |
| 7 | MM Authentication Response | MS |
| 8 | RR Ciphering Mode Command | BSS |
| 9 | RR Ciphering Mode Complete | MS |
| 10 | MM Identity Request | BSS |
| 11 | MM Identity Response | MS |
| 12 | RR Measurement Report | MS |
| 13 | System Information Type [5 or 6] | BSS |
| 14 | MM Identity Request | BSS |
| 15 | MM Identity Response | MS |
| 16 | MM Identity Request | BSS |
| 17 | MM Identity Response | MS |
| 18 | System Information Type [5 or 6] | BSS |
| 19 | RR Assignment Command | BSS |
| 20 | RR Assignment Complete | MS |
| 21 | System Information Type [5 or 6] | BSS |
| 22 | Then repeat of System Information and RR Measurement Report messages | |
| | | |
| | Blind Call Clear Down | |
| 1 | RR Channel Release | BSS |
| | | |

The general principle is that a call request is sent to the device (in this case the call request constitutes message numbers 1,2,4,6,8,10,13,14,16,18,19 and 21), and the call request is adapted to cause the device to transmit a locator signal whilst blocking a connection management process which would otherwise cause the mobile communication device to provide a visual or audible alert. In this case, the call request omits conventional BSS originated CC (Connection Control) messages. Hence the MS protocol state machines associated with the CC messages do not move from idle.

Note that other message orders are possible. The order given above is not proscriptive. In particular the RR Measurement Report and all the System Information Messages are mandated to be transmitted within a certain time, hence these messages can appear at unpredictable times in the message sequences.

The method described above manipulates standard GSM protocols to ensure that the connection management (CC) protocol does not cause the mobile phone to "alert". The conventional radio resource (RR) and mobility management level (MM) protocols are allowed to get to the point where a physical RF carrier is established, but the subsequent connection management processes are blocked. A GSM traffic channel (TCH) is established, but no indication of doing so is indicated on the MS 4.

The message sequence shown in Table 1 can set up a blind call with a variety of different GSM phones from a variety of different manufacturers (and hence different communication protocols), such as Sony Ericsson, and Nokia.

### 1.2 GSM Direction Finding

Once the blind call has been set up by the method above, the direction finder 6 performs direction finding on an uplink transmission signal which is transmitted by the MS 4 in one timeslot out of eight at the GSM frame rate. Thus, in summary, the SIBTS 10 sets up a blind call, causing the device to transmit a succession of locator signals (that is, the uplink transmission signals); and the direction finder 6 receives the locator signals from the MS 4 over a wireless link, and determines the direction of the MS 4 by measuring the direction of arrival of the locator signals.

The SIBTS 10 may cause the GSM traffic frequency to be allocated to a frequency specially selected to be a quiet frequency where there is no other traffic. To achieve this, the SIBTS 10 monitors traffic on a plurality of frequencies; selects a frequency on the basis of the monitoring; and causes the locator signal to be transmitted on the selected frequency. This therefore means that the TCH to the MS 4 is the only transmitter on this selected frequency and consequently that frequency can be used for simple direction finding. This also means that the direction finder 6 can be made inexpensive as it does not have to differentiate between timeslots (of which there are eight in a GSM channel), since the MS 4 will be the only transmitter on that GSM frequency.

Alternatively, the SIBTS 10 may cause the GSM traffic timeslot to be allocated to a timeslot specially selected to be a quiet timeslot where there is no other traffic. In this case, there may be traffic on other timeslots at the same frequency.

An alternative to the method above is to invoke a GSM GPRS Test Mode A or Test Mode B over the air in order to cause the MS 4 to start transmitting. Again the quiet channel principle can be applied as described above. Test Modes A and B are standard GSM test modes.

As shown in Figure 1, the SIBTS 10 and direction finder 6 are connected by a communication link 7. At its most basic form the link 7 may be achieved by the operator of the SIBTS 10 calling the operator of the direction finder 6 on his mobile telephone and communicating information verbally. However, the link 7 may alternatively be an automated wireless link directly between the SIBTS 10 and the direction finder 6.

The link 7 enables channel information to be transmitted to the direction finder 6. On receipt of the channel information, the direction finder 6 is configured to monitor for a locator signal on a channel identified by the channel information. For example, the channel information may be a particular ARFCN plus timeslot information. This has the advantage that any GSM channel can be used which has a timeslot free, rather than requiring the whole GSM ARFCN channel to be free.

Additionally a "real time" means of signaling from the SIBTS to the direction finder 6 may indicate when a specific GSM Blind Call is started and finished. Thus, the SIBTS 10 sends a monitoring request to the direction finder 6 via the link 7, and in response to the monitoring request the direction finder 6 powers up, and monitors a selected channel for a locator signal. Therefore the operator of the direction finder 6, which is almost always separately located away from the SIBTS 10, can be most effective in only direction finding when the blind call is active.

The direction finder 6 may calculate an approximate range to the MS 4, based on signal strength. This is more accurate in rural locations than in built up areas due to the lack of signal reflections.

Also, the SIBTS 1 and/or direction finder 6 may cause the MS 4 to boost the power of the locator signal by transmitting a boost request to the MS 4.

### 2.0 3G

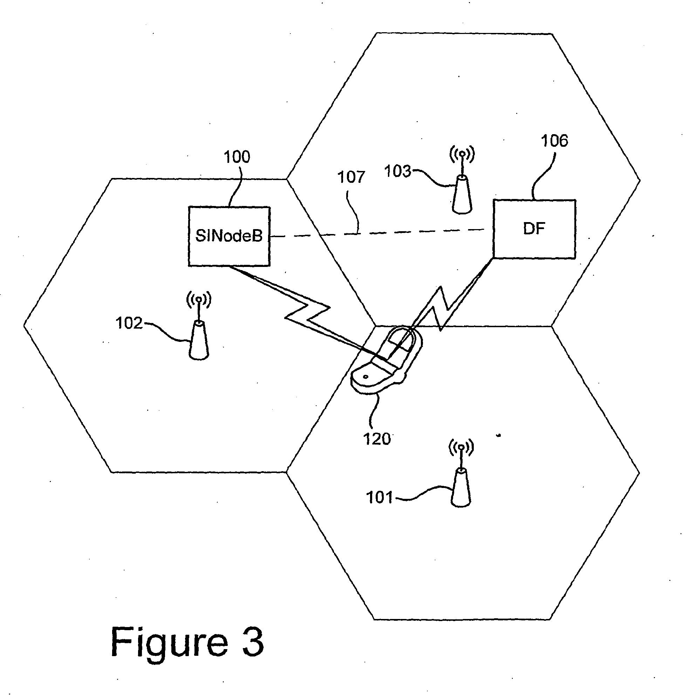

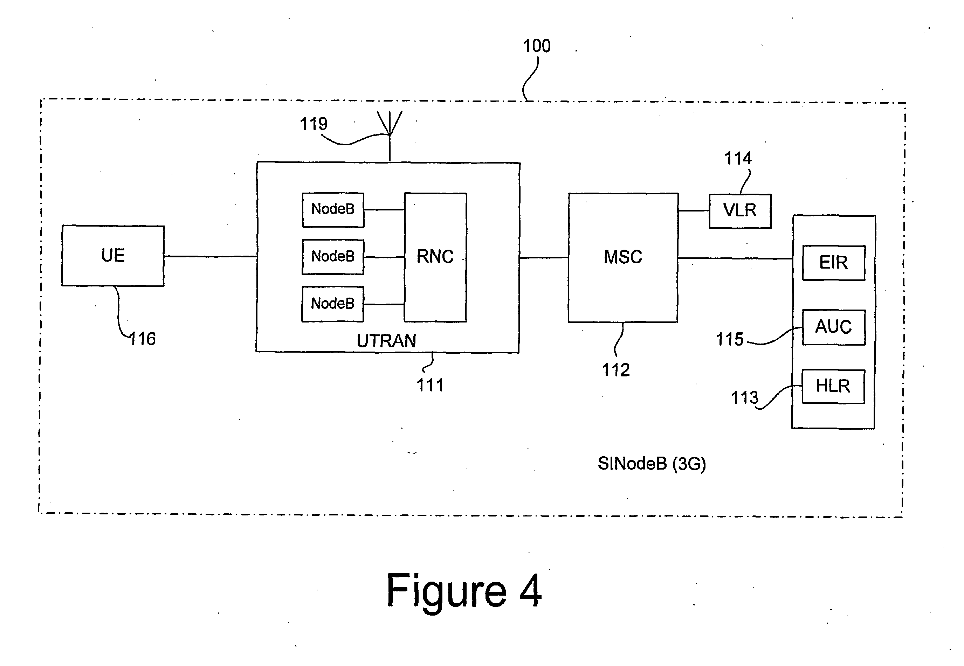

Figures 1 and 2 above show a method and apparatus for setting up a blind call with a GSM MS, using a Separately Introduced Base Station (SIBTS) 10, and direction finding to the device with a direction finder 6. Figures 3 and 4 below illustrate an equivalent method and apparatus which is configured to work with a Third Generation (3G) network.

### 2.1 3G Blind Call Setup

Figure 3 shows a 3G network comprising three NodeBs 101-103 broadcasting to three cells by downlink transmissions 104-106 each having a unique downlink scrambling code. On moving into the vicinity of the three NodeBs, a User Equipment device (UE) 120 evaluates on which NodeB to camp.

The UE 120 is required to constantly re-evaluate the signals from cells around it. It does this to ensure that during a connection (data or voice) it is always communicating with the best (most appropriate) NodeB. However a 3G UE will spend most of its time when not transmitting voice or data traffic in an idle state. In this idle state the UE will monitor the strength of the serving NodeB and other neighbour NodeBs, and if the criteria specified by the network are met then it will perform a cell reselection converting one of the previous neighbour NodeBs into the new serving NodeB. If this new serving NodeB is in a different location or routing area then the UE must perform a location or routing area update procedure to inform the network of its new location. This is done so that the network will always have an idea of where the UE is in the network, so that in the event of an incoming call request to the UE the network can use the minimum amount of resources to request the UE to establish a signaling connection.

Each NodeB transmits broadcasted information that serves two main purposes. First, some of this information is transmitted using well know codes and data patterns that allow the UE to recognise that the RF signal being received is actually a UMTS cell and also allows the UE to perform power measurements on the received signal. Second, descriptive information about the cell is broadcast. This system information is transmitted in the form of System Information Blocks (SIBS) which describe many parameters of the NodeB and provide enough information for the UE to identify the mobile network that the NodeB belongs to, and also to establish a signaling connection if it needs to.

Figure 4 shows a Separately Introduced NodeB (SINodeB) 100. The SINodeB 100 is configured to acquire an identity parameter from a UE registered with the 3G network of Figure 3. This is achieved by emulating a NodeB using a method specially adapted to the UMTS protocol, as described in further detail below.

The SINodeB 100 is typically a mobile device, which may be housed in a vehicle. In use, the SINodeB 100 is moved to an area, and operated to acquire identity parameters from a set of User Equipment devices (UEs) registered with the 3G network in that area. Alternatively the SINodeB 100 may be permanently located in an area of interest. In both cases, the SINodeB 100 effectively transmits a false cell broadcast which is not under the control of the 3G network providing coverage to that area.

In order to persuade the UE to move over to the SINodeB 100, certain criteria must be met. Primarily the transmission must be received at the UE with a higher signal strength. Even once the UE has made the decision that the SINodeB 100 is preferential it would normally be considered necessary to pass the UMTS security procedures in order to be able to gather any useful information or perform any useful tasks.

It is not necessary to exactly emulate all the configuration of an existing NodeB for it to be a suitable candidate for a UE to connect to. This makes the task of configuring the SINodeB 100 much simpler. The reason for this is that the broadcasted system information defines the configuration of the cell that is transmitting that data, and cells within the same network will have different configurations, so the UE always looks at the data from the current cell to determine the necessary information.

The key parameters in the false cell broadcast that need to be considered for changing are as follows:
- Cell Frequency
- Primary Scrambling code
- Mobile Country Code (MCC) [- which country this cell is in]
- Mobile Network Code (MNC) [- which network this cell belongs to]
- Location area code (LAC)
- Routing area code (RAC)
- Cell power
- SIB value tags [- Value tags are use by the UE to detect if SIB information has changed between reads of the SIBs]
- Contents of SIB 18 and SIB 11 for serving cell [- SIB 11 contains measurement control information to be use by the UE in idle mode / SIB 18 contains PLMN ids of neighbour cells to be considered in idle and connected mode]

The MCC and MNC must be the same as the serving cell for the UE to consider the SINodeB to be in the same network.

The Cell Frequency must be the same as the serving cell to make the process as easy as possible - interfrequency reselections have more complex criteria and processes.

There are several options for configuring the other parameters transmitted by the SINodeB:
1) Same LAC/RAC and Primary Scrambling code, different SIB value tags - This completely mimics the serving cell, and allows the SINodeB to actively grab the UE.
2) Different LAC/RAC and Primary Scrambling code - where Scrambling code is present in the SIB11 of the serving cell. This is mimicking a neighbour NodeB that the serving NodeB has been instructing the UE to perform measurements on - thus ensuring that the UE is actively searching for a cell with the same key characteristics as that being transmitted by the SINodeB (primarily scrambling code, and frequency). This causes a UE to perform a cell reselection to the SINodeB if the SINodeB transmission is of sufficiently higher power than the serving NodeB. The amount by which the SINodeB needs to be a stronger signal is defmed in SIB3 of the serving NodeB.
3) Different LAC/RAC and Scrambling code - no reference in SIBS of the serving NodeB.

Once a suitably strong and configured cell is being transmitted, the UEs in the target area will perform a cell reselection to the SINodeB and establish an RRC connection for the purpose of performing a location updating procedure. The location update is required because the LAC of the SINodeB is different from the old serving SINodeB. Once the RRC connection is established the SINodeB has the opportunity to perform other signaling procedures as desired.

The UMTS protocol is designed to enhance the security and identity protection features in GSM. To this end, authentication and integrity mechanisms are used in addition to the temporary identities found in GSM. These temporary identities avoid the frequent transmission of the identity of the IMSI and the IMEI, because once the network has assigned the phone a temporary identity then it maintains a mapping from that new identity to the IMSI.

Mechanisms exist to allow the network to interrogate a phone for its IMSI and IMEI and these are used for the first connection of a phone to the network or when an error has occurred and the network needs to re-establish the correct mapping between a temporary identity (such as a TMSI) and its associated real identity (such as an IMSI). In normal network operation almost all signaling between the UE and the network must be performed after the authentication procedure has been completed successfully and integrity has been enabled on the signaling connection. This makes the falsification or modification of signaling by a third party effectively impossible.

Unless a NodeB is provided with a mechanism to successfully pass the authentication and integrity procedures, then the UMTS protocols are designed that almost no useful communication can be achieved with the UE. However there are "gaps" in the UMTS protocols that allow the IMSI, IMEI and TMSI to be retrieved from the UE by the SINodeB 100 without requiring these security mechanisms.

These "gaps" are described in 3GPP TS 33.102 version 3.13.0 Release 1999, and in 3GPP TS 24.008 version 3.19.0 Release 1999. The relevant portions of these protocols will now be described.

### 3GPP TS 33.102 version 3.13.0 Release 1999

This protocol specifies in Section 6.5 that all signaling messages except the following shall be integrity protected:
HANDOVER TO UTRAN COMPLETE
PAGING TYPE 1
PUSCH CAPACITY REQUEST
PHYSICAL SHARED CHANNEL ALLOCATION
RRC CONNECTION REQUEST
RRC CONNECTION SETUP
RRC CONNECTION SETUP COMPLETE
RRC CONNECTION REJECT
RRC CONNECTION RELEASE (CCCH only)
SYSTEM INFORMATION (BROADCAST INFORMATION)
SYSTEM INFORMATION CHANGE INDICATION

Thus these messages cannot be integrity protected under any circumstances.

### 3GPP TS 24.008 version 3.19.0 Release 1999

This protocol specifies a list of messages which the UE can respond to, in certain circumstances, without first having integrity protected the network. Specifically, the protocol states the following:

Except the messages listed below, no layer 3 signalling messages shall be processed by the receiving MM and GMM entities or forwarded to the CM entities, unless the security mode control procedure is activated for that domain.
- MM messages:
- AUTHENTICATION REQUEST
- AUTHENTICATION REJECT
- IDENTITY REQUEST
- LOCATION UPDATING ACCEPT (at periodic location update with no change of location area or temporary identity)
- LOCATION UPDATING REJECT
- CM SERVICE ACCEPT, if the following two conditions apply:
- no other MM connection is established; and
- the CM SERVICE ACCEPT is the response to a CM SERVICE REQUEST with CM SERVICE

### TYPE IE set to 'emergency call establishment'

- CM SERVICE REJECT
- ABORT
- GSM messages:
- AUTHENTICATION & CIPHERING REQUEST
- AUTHENTICATION & CIPHERING REJECT
- IDENTITY REQUEST
- ATTACH REJECT
- ROUTING AREA UPDATE ACCEPT (at periodic routing area update with no change of routing area or temporary identity)
- ROUTING AREA UPDATE REJECT
- SERVICE REJECT
- DETACH ACCEPT (for non power-off)

### CC messages:

- all CC messages, if the following two conditions apply:
- no other MM connection is established; and
- the MM entity in the MS has received a CM SERVICE ACCEPT message with no ciphering or integrity protection applied as response to a CM SERVICE REQUEST message, with CM SERVICE

### TYPE set to 'Emergency call establishment' sent to the network.

Therefore an RRC Connection can be set up without requiring integrity protection, since the RRC connection messages are listed as not requiring integrity protection in 3GPP TS 33.102 version 3.13.0 Release 1999. After an RRC Connection has been established between the SINodeB and the UE, for the purpose of a location update procedure a series of MM Identity Requests are sent by the SINodeB 100 to retrieve the UE identification information. Again, the UE responds to these MM Identity Requests without requiring integrity protection because MM Identity Request is specified in the list given above in 3GPP TS 24.008 version 3.19.0 Release 1999.

Specifically, the series of messages between the UE and the SINodeB is as follows:
UE <-> SINodeB
-> RRC Connection Request
<- RRC Connection Setup
-> RRC Connection Setup Complete
-> MM Location Update Request
<- MM Identity Request (Requesting IMSI)
-> MM Identity Response (IMSI)
<- MM Identity Request (Requesting IMEI)
-> MM Identity Response (IMEI)
<- MM Identity Request (Requesting IMEISV)
-> MM Identity Response (IMEISV)

When the UE sends the MM Location Update Request, it also starts an LAC update timer. The SINodeB ignores this request. If the UE does not receive a valid response to the MM Location Update Request within a predetermined time, then the UE resends the MM Location Update Request. This process is repeated a few times and then the UE aborts the connection.

Thus by sending the series of three MM Identity Requests straight after the RRC Connection is established, and before the UE aborts the connection, the SINodeB can receive the MM Identity Response messages from the UE without requiring integrity protection.

Once the identity information has been collected, the SINodeB rejects the location update request thus preventing the UE from repeatedly trying to camp on to the SINodeB.

### 2.2 3G Maintenance of RRC Connection

In the circumstances described above, once the UE establishes the RRC connection it will transmit a Location Update request message. In normal operation the network will then perform the authentication and integrity procedures, that ensure that the UE and the network are both confident that the other is legitimate. After this, the network will send an integrity protected location update accept message. The UE is required by the standards to ignore this message if it is not successfully integrity protected, so that a SINodeB is effectively prevented from performing this step successfully.

Once the UE sends the Location Update Request message it starts a timer, and if a successful location update accept is not received before the timer expires the UE will abort the attempt and then retry. There is a retry counter and if the UE has retried too many times, it will abort the attempts and move on to another cell.

Normal network protocol message flows will result in the RRC Connection being dropped if the UE aborts the connection. This is either because the network drops the connection for its own reasons or because the UE has requested it.

The release of the RRC connection is controlled by the network and it is possible in the SINodeB to try to maintain the connection once the UE has requested that it be released.

Certain messages and procedures are not required to be integrity protected and so these can be used to continue communication with the UE, independently from the location update procedure. An example of this is the RRC UE Capability request and response messages.

So a flow that allows the RRC Connection to be maintained for a few minutes could be like this:
<-> Establish RRC Connection
-> UE sends location update request message and starts LAC update timer
<-> Network repeatedly sends UE Capability Request message and the UE replies (this ensures that the RRC Connection is kept active even though the network has not replied to the location update request)
-> After a few seconds the UE sends an RRC Signalling connection release indication, requesting the release of the RRC Connection. The SINodeB ignores this message.
-> LAC update timer expires - so the UE resends the location update
<-> Procedure repeats a few times and then the UE aborts the connection completely and searches for other cells.

During this process the RRC UE Capability Request messages (or some other information request) are used to trick the RRC protocol layer into believing that the link is active and thus even when the Location update procedure times out, the RRC Connection should be maintained.

This RRC Connection can be maintained for several minutes with no indication to the UE user that there is anything happening. During this time it is thus possible to use the transmissions from the UE for direction finding purposes, as described below in section 2.3.

If a longer period of continuous transmission is required then all that is necessary is to cause the UE to attempt to perform another location update procedure again. This can be achieved by broadcasting a second false cell broadcast with a different LAC from the SINodeB. Thus in this case the SINodeB first establishes an RRC connection with the device where the SINodeB is broadcasting a cell configured with a first LAC code to the UE; detects that the UE has released the RRC connection, and in response to that detection immediately transmits a second cell with a second LAC code to cause the UE to re-establish the RRC connection with the SINodeB. This process can then be repeated with different LAC codes to maintain the RRC connection indefinitely.

Instead of transmitting the different LAC codes one after the other in the way described above, the multiple NodeBs (which are substantially co-located in the SINodeB) may simultaneously transmit the cells with different LACs.

Thus, by the methods described above, the SINodeB establishes and maintains a "blind call" with the UE: that is a signal connection which does not cause the UE to provide a visual or audible alert.

### 2.3 3G Code

By following the process described above in sections 2.1 and 2.2, the SINodeB 100 can maintain an RRC connection for a prolonged period of time. For the purposes of direction finding however it is also necessary to ensure that the UE is transmitting on a known and fixed scrambling code.

In the real network the received signal has to go through many stages of demultiplexing/decoding before useful user data is output. This is because the data transmitted over the air consists of multiple logical channels that are mapped onto transport channels. These transport channels are then mapped onto physical channels. At each stage of multiplexing, different channels that are mapped onto the same carrier channel must be differentiated. This is done using additional coding steps.

For example the last stage in this process, involves combining all the physical channels into a single UE transmission. The physical channels are all treated with different channelisation codes and then they are summed and the result is treated with the scrambling code that makes the UE transmission distinguishable from other UEs.

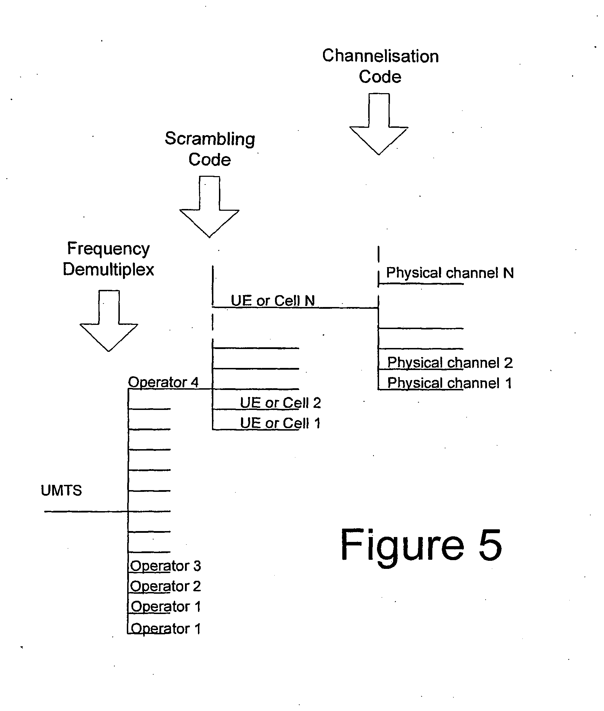

The decoding/demultiplexing process performed by the SINodeB and the UE are illustrated in Figure 5. The UMTS spectrum is divided into multiple frequency channels (twelve in the UK), each defined by a frequency band with a central frequency defined by a UARFCN and associated with a particular Operator. In the uplink direction each channel is decoded by a NodeB using a respective uplink descrambling code, each uplink descrambling code being associated with a respective UE. After descrambling, the signal is further decoded using a number of channelisation codes, to give N dedicated physical channels each associated with a respective channelisation code. In the downlink direction each channel is decoded by the UE using a respective downlink scrambling code, each downlink scrambling code being associated with a respective cell.

In UMTS there are two main ways in which the UE is able to make a signaling connection to the network. The first is using the RACH channel, which is a form of random access mechanism in which all the UEs compete for a shared communications resource. The FACH channel is used by the network to respond to signaling received on the RACH channel. In this case the message will be broadcast so each UE will be able to receive it but it will have an identifier detailing which UE the message is targeted at. When the mechanism where the RACH and FACH channels are used for communication, the UE is usually said to be in the cellFACH state. This is used by the network for low bandwidth signaling or data transfer. The location update process is usually carried out in cellFACH because this signaling process is short and it is not worth allocating dedicated network resource to this short and fairly regular procedure.

In the case where the aim of maintaining the connection is for direction finding, the shared communication mechanism of cellFACH is not helpful, as many UEs will be using the same codes.

When establishing an RRC connection, the SINodeB instructs the UE to use a dedicated channel (cellDCH state), associated with a chosen uplink scrambling code and a chosen channelisation code. In this case the RRC Connection Setup message describes the dedicated channel (DCH) that the UE and network will use to communicate.

### 2.4 3G Direction Finding

Once the UE is transmitting on a specified DCH, a direction finder 106 can perform direction finding using the technique described below.

Direction finding in 3G differs from that in 2G because the 2G signal is purely in the frequency domain, while the 3G signal is in the code domain. This means that in 2G a direction finding algorithm can work by analyzing the timing differences between suitably filtered signals received at each of the antennas in the antenna array. In 3G it is necessary to produce a suitable input to provide to the direction finding algorithm. Effectively this means that the filtered signal received at each antenna in the array needs to be independently tracked and descrambled/decoded.

Therefore the direction finder 106 determines the direction of the encoded 3G locator signal by detecting the locator signal with an array of N antennas, separately decoding an output of each antenna to generate N decoded outputs, and measuring the direction of arrival of the locator signal by analyzing the N decoded outputs.

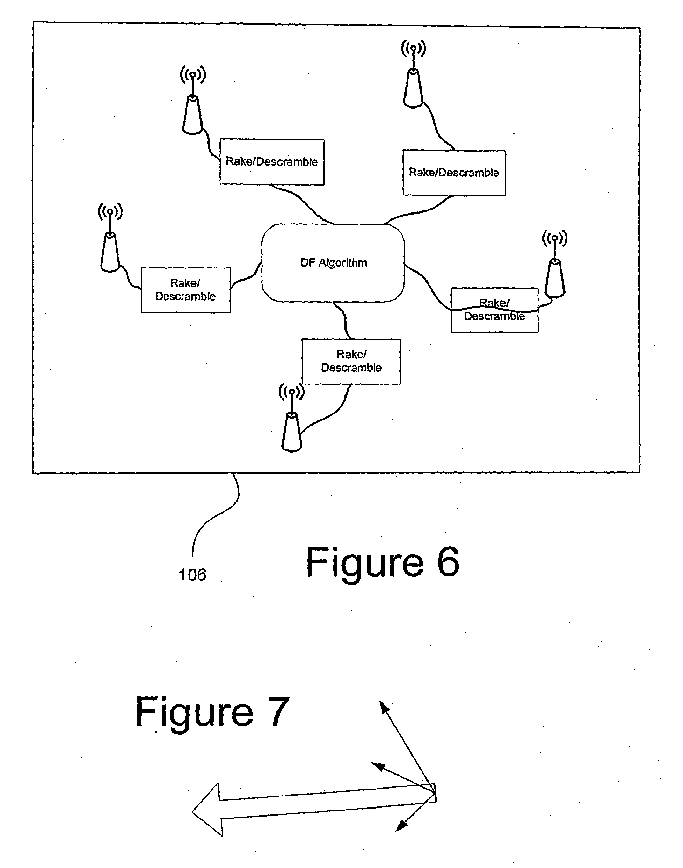

The direction finder 106 is illustrated in further detail in Figure 6, and comprises a processor running a DF algorithm, an array of five antennas, and an array of five RAKE receivers and descramblers, each receiving encoded locator signals from a respective antenna and generating a decoded output to the DF algorithm.

Each RAKE receiver has a collection of independent subreceivers/descramblers. Each rake subreceiver/descrambler is configured to decode and track an encoded locator signal associated with a different propagation path from the device. For instance one rake subreceiver/descrambler might decode and track a main propagation path on a direct line of sight with the device and another rake subreceiver might decode and track a secondary propagation path caused by reflection from a nearby object. Thus each rake subreceiver/descrambler generates two outputs:
- timing information: that is, data indicating the phase offset of the rake subreceiver/descrambler; and
- signal amplitude data.

In a conventional rake receiver, a combiner block coherently sums the signal amplitude data from all rake subreceivers and the coherent sum is then used as the input into the next decoding process in the receive chain. In contrast, the rake receivers/descramblers of Figure 6 do not pass on such a coherent sum to the DF algorithm. For direction finding, it is not the coherently summed signal amplitude data that is of interest, but the timing information and the signal amplitude data associated with each propagation path. Hence the rake receivers/descramblers input this timing information and signal amplitude data to the DF algorithm.

The rake receivers/descramblers are all synchronized to a single accurate timing source, to ensure that the small delays between receiving a signal at each antenna in the array are accurately represented in the timing information.

The DF algorithm then performs correlation functions using the timing information and signal amplitude data to generate an output which can be displayed to a user. An example of how the information might be presented is shown in Figure 7. A number of arrows are displayed on a map, with the length and/or width of the arrow indicating the signal amplitude, and the direction of the arrow indicating the direction which is deduced from the timing information. Each arrow is associated with a different propagation path from the device.

Given that there is a small risk that the uplink scrambling code chosen by the SINodeB for the target UE is already in use by another UE connected to the real network, it will be necessary to check that there is no UE transmission using the scrambling code about to be allocated.

This can be performed in one of two ways:
1. The direction finder stores a list A of possible uplink scrambling codes, and checks for uplink signals on all of these scrambling codes, giving a subset B of the list A. It then allocates a scrambling code C which is in list A but not list B. It then sends data to the SINodeB which identifies the scrambling code C, and the SINodeB assigns that scrambling code to the UE.
2. The SINodeB sends a message to the direction finder identifying a scrambling code which it proposes to use. The direction finder checks for an uplink signal using the proposed code. If no uplink signal is found then the direction finder informs the SINodeB, and the SINodeB assigns that scrambling code to the UE. If an uplink signal is found then the direction finder informs the SINodeB, and the SINodeB initiates another check using a different proposed code. This is repeated until a scrambling code is assigned to the UE.

By performing only a single decoding step (using the uplink descrambling code) this technique provides a descrambled signal containing all RF power from the target UE. The descrambled signal is then analyzed as described above.

### 3 2G/3G Target Verification

Sections 1 and 2 above describe methods of acquiring identity parameters from an MS/UE, setting up a blind call with the MS/UE, and performing direction finding.

In an enhanced version of either method, the acquisition of identity parameters can be used to verify that the MS/UE is a target MS/UE.

Thus the process flow is as follows:
1. Direction finder stores the IMSI and/or IMEI of a target MS/UE.
2. BTS/SINodeB acquires the IMSI and/or IMEI of a candidate MS/UE and sends to a database
3. The database checks the IMSI/IMEI of the candidate MS/UE against the stored IMSI/IMEI
4. If there is a match, then the database informs the BTS/SINodeB which completes the blind call process, and the direction finder proceeds to carry out direction finding
5. If there is not a match, then the database informs the BTS/SINodeB which aborts the blind call process.

### 4 Combined 2G/3G

Figures 1,2 describe a SIBTS 10 and direction finder 6 which are configured for GSM, and Figures 3,4 describe a SINodeB 100 and direction finder 106 which are configured for 3G. In an alternative embodiment (not shown), one or both devices may be configurable for GSM and 3G.

## Claims

1. A method of determining the direction of a mobile communication device, the method comprising causing the device to transmit a locator signal by transmitting a call request to the device over a wireless link, wherein the call request is adapted to cause the device to transmit a locator signal whilst blocking a connection management process which would otherwise cause the mobile communication device to provide a visual or audible alert; receiving the locator signal from the device over a wireless link; and determining the direction of the device by measuring the direction of arrival of the locator signal, **characterized in that** the method further comprises monitoring traffic on a plurality of channels; selecting a channel on the basis of the monitoring; and causing the locator signal to be transmitted on the selected channel.

2. The method of claim 1 further comprising transmitting a monitoring request to a direction finder (106), the monitoring request being adapted to cause the direction finder to determine the direction of the device by measuring the direction of arrival of the locator signal.

3. A method according to claim 2 further comprising transmitting channel information to the direction finder (106), the channel information identifying the channel of the locator signal.

4. A method according to claim 3 wherein the channel information includes timeslot and/or frequency information.

5. A method according to any preceding claim further comprising acquiring an identity parameter of the device; checking if there is a match with a stored target identity parameter; and determining the direction of the device if there is a match.

6. A method according to any preceding claim wherein the direction of arrival of the locator signal is determined by sensing the locator signal with two or more spaced apart sensors; and determining the direction of arrival of the locator signal by a process of triangulation.

7. A method according to any preceding claim wherein the call request blocks the connection management process by omitting one or more connection management requests.

8. A method according to any preceding claim wherein the call request blocks the connection management process by causing the device to enter into a test mode.

9. A method according to claim 8 wherein the test mode is GSM GPRS test mode A or B.

10. A method according to any preceding claim further comprising causing the device to boost the power of the locator signal by transmitting a boost request to the device.

11. A method according to any preceding claim wherein the call request is a GSM call request.

12. A method according to any preceding claim wherein the locator signal is an encoded locator signal.

13. A method according to claim 12 wherein the call request instructs the device to transmit the locator signal using a specific code.

14. A method according to any preceding claim wherein the call request blocks the connection management process by receiving a request from the device to release the call; and repeatedly sending a request for information to the device to prevent the device from releasing the call.

15. Apparatus (10,100) configured to perform a method according to any preceding claim.

## Patentansprüche

1. Verfahren zum Bestimmen der Richtung einer mobilen Kommunikationseinrichtung, umfassend
- Veranlassen der Einrichtung, ein Ortungssignal zu senden, indem eine Verbindungsanforderung über eine drahtlose Verbindung zu der Einrichtung gesendet wird, wobei die Verbindungsanforderung geeignet ist, die Einrichtung zu veranlassen, ein Ortungssignal zu senden, während ein Connection Management-Prozess blockiert wird, der sonst einen optischen oder akustischen Alarm durch die mobile Kommunikationseinrichtung verursachen würde,
- Empfangen des Ortungssignals von der Einrichtung über eine drahtlose Verbindung, und
- Bestimmen der Richtung der Einrichtung durch Messung der Einfallsrichtung des Ortungssignals, **dadurch gekennzeichnet, dass** das Verfahren ferner umfasst:
- die Überwachung des Verkehrs auf einer Vielzahl von Kanälen,
- die Auswahl eines Kanals auf der Grundlage der Überwachung, und
- das Bewirken, dass das Ortungssignal auf dem ausgewählten Kanal gesendet wird.

2. Verfahren nach Anspruch 1, ferner umfassend das Senden einer Überwachungsanforderung an ein Peilgerät (106), wobei die Überwachungsanforderung geeignet ist, das Peilgerät zu veranlassen, durch Messung der Einfallsrichtung des Ortungssignals die Richtung der Einrichtung zu bestimmen.

3. Verfahren nach Anspruch 2, ferner umfassend das Senden von Kanalinformation zum Peilgerät (106), wobei die Kanalinformation den Kanal des Ortungssignals identifiziert.

4. Verfahren nach Anspruch 3, wobei die Kanalinformation Information über Zeitkanal und/oder Frequenz umfasst.

5. Verfahren nach einem der vorangehenden Ansprüche, ferner umfassend die Erfassung eines Kennparameters der Einrichtung, die Prüfung, ob es Übereinstimmung mit einer gespeicherten Zielkennung gibt, und bei Übereinstimmung die Bestimmung der Richtung der Einrichtung.

6. Verfahren nach einem der vorangehenden Ansprüche, wobei die Einfallsrichtung des Ortungssignals durch Abtasten des Ortungssignals mit zwei oder mehreren beabstandeten Sensoren bestimmt wird und die Einfallsrichtung des Ortungssignals durch ein Triangulationsverfahren bestimmt wird.

7. Verfahren nach einem der vorangehenden Ansprüche, wobei die Verbindungsanforderung den Connection Management-Prozess durch Weglassen einer oder mehrerer Connection Management-Anforderungen blockiert.

8. Verfahren nach einem der vorangehenden Ansprüche, wobei die Verbindungsanforderung den Connection Management-Prozess blockiert, indem sie die Einrichtung veranlasst, in einen Testmodus einzutreten.

9. Verfahren nach Anspruch 8, wobei der Testmodus der GSM GPRS-Testmodus A oder B ist.

10. Verfahren nach einem der vorangehenden Ansprüche, ferner umfassend das Veranlassen der Einrichtung, die Leistung des Ortungssignals durch Senden einer Anhebeanforderung an die Einrichtung anzuheben.

11. Verfahren nach einem der vorangehenden Ansprüche, wobei die Verbindungsanforderung eine GSM-Verbindungsanforderung ist.

12. Verfahren nach einem der vorangehenden Ansprüche, wobei das Ortungssignal ein verschlüsseltes Ortungssignal ist.

13. Verfahren nach Anspruch 12, wobei die Verbindungsanforderung die Einrichtung anweist, das Ortungssignal unter Anwendung eines bestimmten Schlüssels zu senden.

14. Verfahren nach einem der vorangehenden Ansprüche, wobei die Verbindungsanforderung den Connection Management-Prozess blockiert, indem eine Anforderung zum Abbauen der Verbindung von der Einrichtung empfangen und wiederholt eine Informationsanforderung zur Einrichtung gesendet wird, um die Einrichtung am Abbauen der Verbindung zu hindern.

15. Gerät (10, 100), konfiguriert zur Ausführung eines Verfahrens nach einem der vorangehenden Ansprüche.

## Revendications

1. Procédé de détermination de la direction d'un dispositif de communication mobile, le procédé comprenant de faire émettre par le dispositif un signal de localisation en émettant une demande d'appel vers le dispositif sur une liaison sans fil, dans lequel la demande d'appel est à même de faire émettre par le dispositif un signal de localisation tout en bloquant un procédé de gestion de connexion qui provoquerait sinon la mise en oeuvre par le dispositif de communication mobile d'une alerte visuelle ou audible ; recevoir le signal de localisation en provenance du dispositif sur une liaison sans fil ; et déterminer la direction du dispositif en mesurant la direction d'arrivée du signal de localisation, **caractérisé en ce que** le procédé comprend en outre une surveillance du trafic sur une pluralité de canaux ; choisir un canal sur la base de la surveillance ; et provoquer l'émission du signal de localisation sur le canal sélectionné.

2. Procédé selon la revendication 1, comprenant en outre une étape consistant à émettre une demande de surveillance vers un radiogoniomètre (106), la demande de surveillance étant adaptée de façon à faire déterminer par le radiogoniomètre la direction du dispositif en mesurant la direction d'arrivée du signal de localisation.

3. Procédé selon la revendication 2, comprenant en outre la transmission d'informations de canal au radiogoniomètre (106), les informations de canal identifiant le canal du signal de localisation.

4. Procédé selon la revendication 3, dans lequel les informations de canal comprennent des informations d'intervalle de temps et / ou de fréquence.

5. Procédé selon l'une quelconque des revendications précédentes, comprenant en outre l'acquisition d'un paramètre d'identité du dispositif ; la vérification de si une correspondance existe avec un paramètre d'identité cible mémorisé ; et la détermination de la direction du dispositif si une correspondance existe.

6. Procédé selon l'une quelconque des revendications précédentes, dans lequel la direction d'arrivée du signal de localisation est déterminée en détectant le signal de localisation avec deux détecteurs espacés ou plus et en déterminant la direction d'arrivée du signal de localisation par un procédé de triangulation.

7. Procédé selon l'une quelconque des revendications précédentes, dans lequel la demande d'appel bloque le procédé de gestion de connexion en omettant une ou plusieurs demandes de gestion de connexion.

8. Procédé selon l'une quelconque des revendications précédentes, dans lequel la demande d'appel bloque le procédé de gestion de connexion en faisant entrer le dispositif dans un mode d'essai.

9. Procédé selon la revendication 8, dans lequel le mode d'essai est le mode d'essai GSM GPRS A ou B.

10. Procédé selon l'une quelconque des revendications précédentes, comprenant en outre une étape qui consiste à faire augmenter par le dispositif la puissance du signal de localisation en émettant une demande d'augmentation vers le dispositif.

11. Procédé selon l'une quelconque des revendications précédentes, dans lequel la demande d'appel est une demande d'appel GSM.

12. Procédé selon l'une quelconque des revendications précédentes, dans lequel le signal de localisation est un signal de localisation codé.

13. Procédé selon la revendication 12, dans lequel la demande d'appel ordonne au dispositif d'émettre le signal de localisation en utilisant un code spécifique.

14. Procédé selon l'une quelconque des revendications précédentes, dans lequel la demande d'appel bloque le procédé de gestion de connexion en recevant une demande en provenance du dispositif visant à libérer l'appel ; et en envoyant à plusieurs reprises une demande d'informations au dispositif de façon à empêcher le dispositif de libérer l'appel.

15. Appareil (10, 100) configuré pour exécuter un procédé selon l'une quelconque des revendications précédentes.
